# EUROPEAN PATENT SPECIFICATION

(11) **EP 1 860 836 B1**
(45) Date of publication and mention of the grant of the patent: **13.06.2012**
(21) Application number: 06804989.9
(22) Date of filing: 19.10.2006
(51) Int. Cl.: H04W 4/12, H04W 92/04

(54) **A METHOD, SYSTEM AND DEVICE FOR OBTAINING MULTICAST PROGRAM ADDRESS**
VERFAHREN, SYSTEM UND VORRICHTUNG ZUR GEWINNUNG EINER MULTICAST PROGRAMMADRESSE
PROCÉDÉ, SYSTÈME ET DISPOSITIF D'OBTENTION D'UNE ADRESSE DE PROGRAMME À MULTIDIFFUSION

(30) Priority: 09.01.2006 CN 200610000536
(43) Date of publication of application: 28.11.2007
(73) Proprietor: Huawei Technologies Co., Ltd., Longgang District, Shenzhen Guangdong 518129 (CN)
(72) Inventor: YANG, Jialong, 518129 Shenzhen Guangdong (CN); HUAN, Xuanyi, 518129 Shenzhen Guangdong (CN); YAN, Xuesong, 518129 Shenzhen Guangdong (CN); WANG, Yue, 518129 Shenzhen Guangdong (CN); WU, Wenkui, 518129 Shenzhen Guangdong (CN); ZHANG, Weixing, 518129 Shenzhen Guangdong (CN); ZHAO, Linhua, 518129 Shenzhen Guangdong (CN)
(74) Representative: Körber, Martin Hans
(86) International application number: PCT/CN2006/002776
(87) International publication number: WO 2007/079636

(56) References cited:
- EP-A2- 1 113 648
- WO-A1-2004/086245
- CN-A- 1 463 103
- CN-A- 1 510 940
- CN-A- 1 665 296
- US-A1- 2004 198 279
- US-A1- 2005 143 136
- US-A1- 2005 164 691
- "Over The Air Settings Specification" SPECIFICATION, [Online] vol. 7.0, no. DSS00234-EN, 12 September 2001 (2001-09-12), XP002465948 Ericsson, Nokia Mobile Phones Retrieved from the Internet: URL:http://www.forum.nokia.com/main/resour ces/technologies/device_mgt_and_sync/nokia -ericsson_ota.html> [retrieved on 2008-01-23]

## Description

### Field of the Invention

The present invention relates to the mobile communication technology, and particularly, to a method, a system and an apparatus for acquiring a multicast program address.

### Background of the Invention

Along with the development of mobile communication technology, operators may provide, through a mobile communication network, not only voice and short message services but also stream media multicast and broadcast services for users.

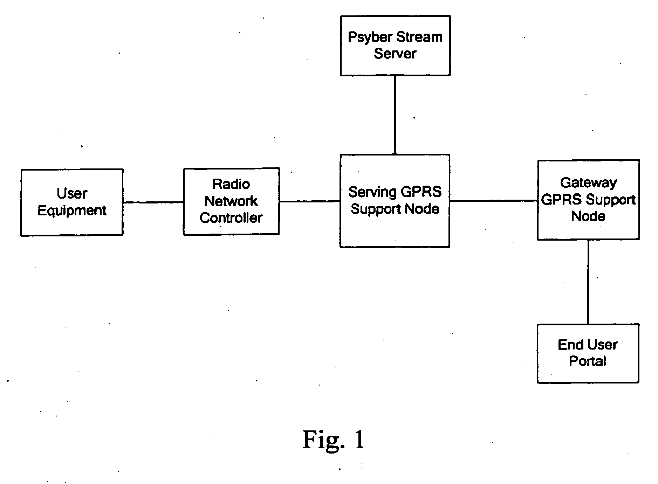

Figure 1 is a schematic diagram illustrating a typical network structure of a system for implementing a multimedia multicast service. As shown in Figure 1, the system includes: User Equipment (UE), a Radio Network Controller (RNC), a Serving GPRS Support Node (SGSN), a Gateway GPRS Support Node (GGSN), a Packet Stream Server (PSS) and an End User Portal ( EU-portal).

During a multicast service, the UE should acquire a multicast program address first, and then perform the multicast service according to the multicast program address. Generally, the UE may acquire the multicast program address by connecting to the network through the Wireless Application Protocol (WAP). Specifically, the UE sends a browsing request to the EU-Portal via the RNC, SGSN and GGSN in turn; upon the receipt of the browsing request, the EU-Portal returns to the UE a multicast program address list, and then the UE acquires the multicast program address according to the multicast program address list.

After acquiring the multicast program address, the UE may send a multicast service request containing the multicast program address to the RNC, and then the RNC sends multicast service data from a PSS to the UE so as to implement the multicast service.

In the prior art, when a mobile user wants to watch the multicast program, he/she may acquire the multicast program address only by connecting to the network through the WAP. In this manner, the process of acquiring the multicast program address is very complicated and the user experience is unsatisfactory.

US 2004/198279 A1 discloses a method for receiving, on a device, broadcast media from a broadcast media station and corresponding interactive broad content associated with the broadcast media station. In the method, upon selection of a bookmark, data terminal device (DTE) sends an SMS message to the server; the SMS message informs the server that the DTE has started listening to the radio station and request associated data from the server; in response, the server sends one or more SMS or MMS message to provide content feed.

US 2005/0143136 A1 discloses an MMS communication system for displaying images on a display terminal of a mobile or portable communication device. The system comprises: an input adapted to receive pre-source information; a server adapted to convert the pre-source information to source information suitable for display on the display terminal, and a source transmitter adapted to transmit the source information to the display terminal.

US 2005/0164691 A1 discloses a method of activating a mobile phone. The method comprise: collecting information associated with the mobile phone and a user associated with the mobile phone; based on the information preparing a home page for the user accessible by a computing device or by the mobile phone; and sending a message to the mobile phone providing an address of the home page.

### Summary of the Invention

The present invention provides a method, a system and an apparatus according to independent claim 1, 7 and 9, respectively, for user equipment acquiring a multicast program address automatically, to avoid the complicated network browsing process.

To sum up, according to the method, the system and the apparatus of the present invention, the multicast program address may be sent to the UE via the OTA and the SMAC, so that the UE may acquire the multicast program address without connecting to the network.

### Brief Description of the Drawings

Figure 1 is a schematic diagram illustrating a typical network structure of a system for implementing a multimedia multicast service.
Figure 2 is a flow chart illustrating the method for acquiring a multicast program address in accordance with an embodiment of the present invention.
Figure 3 is a flow chart of illustrating a method for acquiring a multicast program address in accordance with another embodiment of the present invention.
Figure 4 is a schematic diagram illustrating a system for acquiring a multicast program address in accordance with an embodiment of the present invention.
Figure 5 is a schematic diagram illustrating the internal architecture of UE 403 described in Figure 4 in accordance with an embodiment of the present invention.

### Detailed Description of the Invention

The present invention will be hereinafter described in detail with reference to embodiments and accompanying drawings so as to make the objectives, technical solution and merits of the present invention more apparent.

The embodiments of the present invention include: an OTA sends a message containing a multicast program address to UE via an SMSC, and the UE acquires the multicast program address from the message.

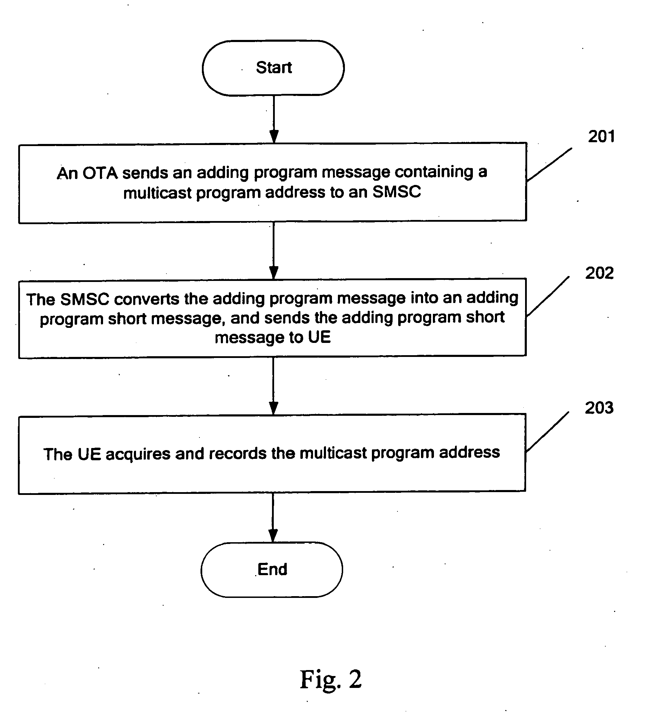

Figure 2 is a flow chart illustrating the method for UE acquiring a multicast program address in accordance with an embodiment of the present invention. As shown in Figure 2, the method for the UE acquiring a multicast program address in accordance with an embodiment of the present invention includes the following processes.

Block 201: An OTA sends an adding program message containing a multicast program address to an SMSC.

Block 202: The SMSC converts the adding program message into an adding program short message, and sends the adding program short message to the UE.

Block 203: The UE acquires the multicast program address from the adding program short message and records the multicast program address.

In the embodiments of the present invention, the OTA, SMSC and UE are all subsystems for implementing a short message service in the mobile commutation network. The OTA may send a Submit_SM containing a source address and short message content to the SMSC by the Short Message Peer to Peer (SMPP) protocol. The source address is an initial address of sending the Submit_SM and may be taken as an identifier of updating a program bookmark list set in the UE. The SMSC converts the Submit_SM sent by the OTA into a short message, and sends the short message to the UE by the NO.7 signaling protocol.

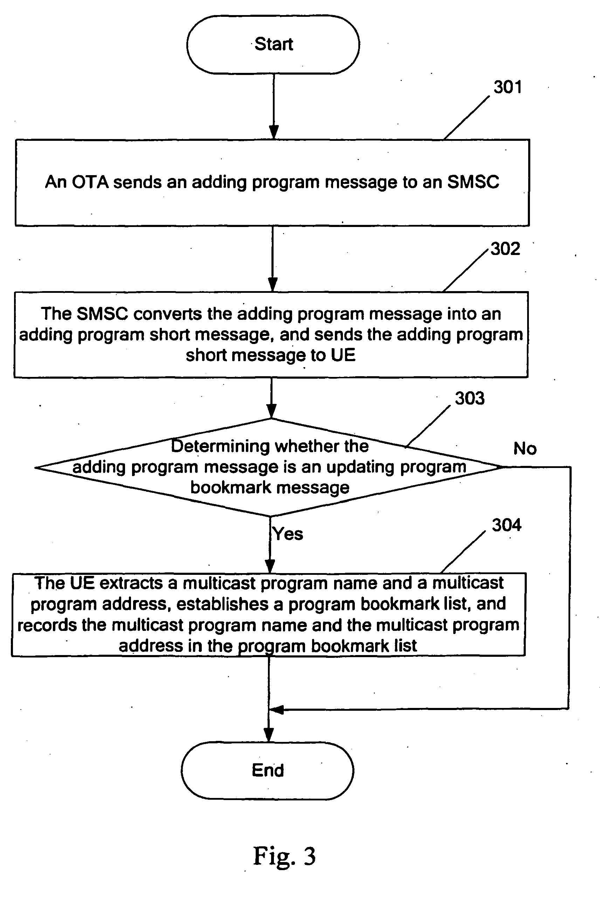

Figure 3 is a flow chart of illustrating a method for acquiring a multicast program address in accordance with an embodiment of the present invention. In the present embodiment, the OTA may send an updating program bookmark message to the UE, and the format of the updating program bookmark message complies with the SMPP protocol. In the embodiment, the format of a source address field and a short message content field in the updating program bookmark message is as shown in Table 1.

**Table 1**

| Source address | Short message content | | |
|---|---|---|---|
| | Multicast program name | Multicast program address | Operation type |
| ... | ... | ... | ... |

The source address is an initial address of sending the updating program bookmark message, and is taken as an identifier of updating program bookmark message. Upon the receipt of a short message, the UE may determine whether the short message is an updating program bookmark message according to the source address, then perform appropriate processing.

Further, operation types may be categorized into three classes, i.e. adding, modifying and deleting. According to different operation types, the updating program bookmark message may be referred to as an adding program message, a modifying program message and a deleting program message, respectively. Because the adding program message, the modifying program message and the deleting program message are all updating program bookmark messages, and the values in their respective source address fields are the same, the UE may determine message type according to the source address and the operation type.

As shown in Figure 3, the method for the UE acquiring a multicast program address in the present embodiment includes following processes.

Block 301: An OTA sends an adding program message containing a multicast program name and a multicast program address to an SMSC.

In the present embodiment, if the OTA and the UE define a Submit_SM of which the source address is 111 as an identifier of updating program bookmark message, and set the operation type as adding, the updating program bookmark message is an adding program message in this manner.

The source address and short message content fields of the adding program message generated by the OTA are shown in Table 2.

**Table 2**

| Source address | Short message content | | |
|---|---|---|---|
| | Multicast program name | Multicast program address | Operation type |
| 111 | Finance and economics information | rtsp://192.168.0.95.financenews.sdp | Adding |

Block 302: The SMSC converts the adding program message into an adding program short message, and sends the adding program short message to the UE.

Block 303: The UE determines whether the adding program short message is an updating program bookmark message according to the source address, if the adding program short message is an updating program bookmark message, Block 304 is performed; otherwise, the flow terminates.

Block 304: The UE acquires the multicast program name and the multicast program address, establishes a program bookmark list, and records the multicast program name and the multicast program address in the program bookmark list.

The program bookmark list in which the UE records the multicast program name and the multicast program address in the embodiment is shown in Table 3.

**Table 3**

| Multicast program name | Multicast program address |
|---|---|
| Finance and economics information | rtsp://192.168.0.95.financenews.sdp |

In practical applications, the UE may perform the multicast service directly by acquiring the multicast program address if the UE does not need the multicast program name. For example, when the UE acquires a multicast node name corresponding to a certain multicast program address in advance, the multicast program name may not be contained in the updating program bookmark message.

In practical applications, after the UE establishes a program bookmark list, the OTA may send an updating program bookmark message to the UE for several times via the SMSC, i.e., the OTA may send an adding program message, a modifying program message or a deleting program message, and then the UE updates the program bookmark correspondingly according to the updating program bookmark message.

When the OTA sends an adding program message to the UE, the method for the UE updating the program bookmark according to the adding program message includes: the UE acquires the multicast program name and the multicast program address from the adding program message, and records the multicast program name and the multicast program address in the program bookmark list.

When the OTA sends a modifying program message to the UE, the method for the UE updating the program bookmark according to the modifying program message includes: acquires the multicast program name and multicast program address from the modifying program message, and changes the multicast program address corresponding to the multicast program name in the program bookmark list into the multicast program address acquired from the modifying program message.

When the OTA sends a deleting program message to the UE, the method for the UE updating the program bookmark according to the deleting program message includes: the UE acquires the multicast program name and multicast program address from the deleting program message, and deletes the multicast program name and multicast program address in the program bookmark list according to the multicast program name and multicast program address acquired from the deleting program message.

In the embodiment of the present invention, the OTA sends the updating program bookmark message to the SMSC first, and then after converting the updating program bookmark message into a short message, the SMSC sends the short message to the UE. So actually, the updating program bookmark message received by the UE is an updating program bookmark message converted into a short message. For the convenience of description, it may be described as the OTA sending an updating program bookmark message to the UE, which means the same.

Additionally, in practice applications, in order to acquire the multicast program address, it is necessary to perform corresponding function design for the UE. There is no strict limit to the function design, as long as the message may be determined as an updating program bookmark message and the multicast program name and the multicast program address may be acquired from the received message.

By the solution of the present invention, the UE may directly choose multicast programs saved in the local bookmark program list during a multicast service, so as to implement the multicast service. The UE may also designate a certain multicast program in the bookmark program list as a default multicast program. In this case, a mobile user may directly perform the multicast service without choosing a multicast program in the program bookmark list during the multicast service, so as to implement the "Push to Talk" service.

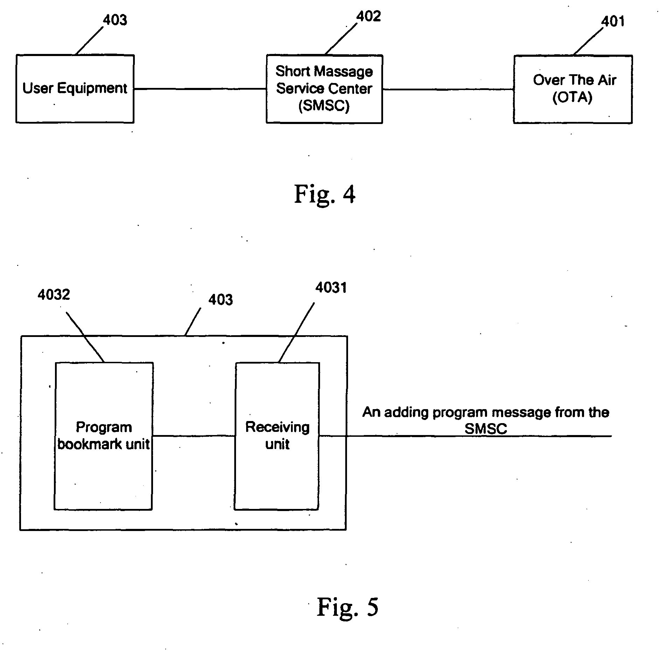

On the basis of the method for UE to acquire a multicast program address, an embodiment of the present invention also provides a system for acquiring a multicast program address. Figure 4 is a schematic diagram illustrating a system for acquiring a multicast program address. As shown in Figure 4, the system includes:
OTA 401, capable of sending an adding program message containing a multicast program address to SMSC 402;
SMSC 402, capable of converting the received adding program message into a short message, and sending the short message to UE;
UE 403, capable of receiving the adding program message converted into the short message from SMSC 402, and acquiring the multicast program address.

Figure 5 is a schematic diagram illustrating the internal architecture of UE 403 described in Figure 4. As shown in Figure 5. UE 403 includes:
receiving unit 4031, capable of receiving an adding program message from the SMSC, and sending the adding program message to program bookmark unit 4032;
program bookmark unit 4032, capable of receiving the adding program message from receiving unit 4031, acquiring a multicast program name and a multicast program address, establishing a program bookmark list and recording the acquired multicast program name and multicast program address in the program bookmark list.

The foregoing descriptions are only preferred embodiments of this invention and are not for use in limiting the protection scope thereof. Any modification, equivalent replacement and improvement made under the principle of the present invention should be included in the protection scope thereof.

## Claims

1. A method for acquiring a multicast program address, **characterized in that** the method comprises:
receiving, by User Equipment, UE (403), via a Short Message Service Center, SMSC (402), program bookmark message from an Over The Air, OTA (401), wherein, the program bookmark message comprises source address, multicast program address and operation type; the program bookmark message is sent (301) by the OTA to the SMSC, and the program bookmark message is converted (302) into a short message by the SMSC, the short message is determined (303) as an updating program bookmark message by the UE according to the source address;
acquiring, by the UE (403), the multicast program address from the program bookmark message if it is determined to be an updating program bookmark message,
determining message type of the updating program bookmark message according to the source address and operation type, and updating a program bookmark list according to the updating program bookmark message.

2. The method of Claim 1, wherein the updating program bookmark message further contains a multicast program name corresponding to the multicast program address; the method further comprises:
acquiring, by the UE (403), the multicast program name from the updating program bookmark message.

3. The method of Claim 2, **characterized in that**:
the updating a program bookmark list according to the updating program bookmark message comprises: updating, by the UE (403), a program bookmark list for recording the multicast program name and the multicast program address according to the multicast program name and the multicast program address.

4. The method of Claim 3, wherein the updating program bookmark message is an adding program message;
updating, by the UE(403), a program bookmark list according to the multicast program name and the multicast program address comprises:
acquiring, by the UE (403), the multicast program name and the multicast program address from the adding program message, and recording the multicast program name and the multicast program address in the program bookmark list

5. The method of Claim 3, wherein the updating program bookmark message is a modifying program message;
updating, by the UE (403), a program bookmark list according to the multicast program name and the multicast program address comprises:
acquiring, by the UE (403), the multicast program name and the multicast program address from the modifying program message, and changing the multicast program address corresponding to the multicast program name in the program bookmark list into the multicast program address acquired from the modifying program message.

6. The method of Claim 3, wherein the updating program bookmark message is a deleting program message;
updating, by the UE (403), a program bookmark list according to the multicast program name and the multicast program address comprises:
acquiring, by the UE (403), the multicast program name and the multicast program address from the deleting program message, and deleting the multicast program name and the multicast program address in the program bookmark list according to the multicast program name and the multicast program address acquired from the deleting program message.

7. A system for acquiring a multicast program addresses, **characterized in that** the system comprises:
an Over The Air, OTA (401), capable of sending (301) an updating program bookmark message to a UE via a Short Message Service Center, SMSC, wherein, the updating program bookmark message comprises source address, multicast program address and operation type;
User Equipment, UE (403), capable of receiving the updating program bookmark message from the OTA (401) via a Short Message Service Center, SMSC (402), and acquiring the multicast program address from the updating program bookmark message and determining message type of the updating program bookmark according to the source address and operation type, and updating program bookmark list according to the updating program bookmark message, wherein, the updating program bookmark message is sent (301) by the OTA to the SMSC, and the updating program bookmark message is converted (302) into a short message by the SMSC, the short message is determined as an updating program bookmark message by the UE according to the source address.

8. The system of Claim 7, wherein the updating program bookmark message further contains a multicast program name corresponding to the multicast program address;
the UE (403) acquires the multicast program name from the updating program bookmark message, and updates a program bookmark list for recording the multicast program name and the multicast program address according to the multicast program name and the multicast program address.

9. An apparatus (403) for acquiring a multicast program address, **characterized in that** the apparatus comprises:
a receiving unit (4031), capable of receiving a program bookmark message from, Short Message Service Center, SMSC; wherein the program book mark message is sent (301) from an OTA to the SMSC, and is converted (302) into a short message by the SMSC, wherein the program bookmark message comprises a source address, a multicast program address and an operation type, wherein the program bookmark message is determined (303) as an updating program bookmark message according to the source address, and wherein a message type is determined according to the source address and the operation type;
a program bookmark unit (4032), capable of receiving the updating program message from the receiving unit, acquiring a multicast program name and a multicast program address, establishing a program bookmark list and recording the multicast program name and the multicast program address in the program bookmark list.

## Patentansprüche

1. Verfahren zum Beschaffen einer Multicast-Programmadresse, **dadurch gekennzeichnet, dass** das Verfahren Folgendes umfasst:
Empfangen einer Programm-Lesezeichennachricht durch ein Benutzergerät UE (403) über ein Short Message Service Center SMSC (402) von einem Over The Air OTA (401), wobei die Programm-Lesezeichennachricht Quellenadresse, Multicast-Programmadresse und Operationstyp umfasst; die Programm-Lesezeichennachricht durch das OTA zu dem SMSC gesendet wird (301) und die Programm-Lesezeichennachricht durch das SMSC in eine Kurznachricht umgesetzt wird (302), wobei die Kurznachricht durch das UE gemäß der Quellenadresse als eine aktualisierende Programm-Lesezeichennachricht bestimmt wird (303);
Beschaffen der Multicast-Programmadresse durch das UE (403) aus der Programm-Lesezeichennachricht, wenn bestimmt wird, dass sie eine aktualisierende Programm-Lesezeichennachricht ist,
Bestimmen des Nachrichtentyps der aktualisierenden Programm-Lesezeichennachricht gemäß der Quellenadresse und dem Operationstyp und Aktualisieren einer Programm-Lesezeichenliste gemäß der aktualisierenden Programm-Lesezeichennachricht.

2. Verfahren nach Anspruch 1, wobei die aktualisierende Programm-Lesezeichennachricht ferner einen Multicast-Programmnamen enthält, der der Multicast-Programmadresse entspricht; wobei das Verfahren ferner Folgendes umfasst:
Beschaffen des Multicast-Programmnamens durch das UE (403) aus der aktualisierenden Programm-Lesezeichennachricht.

3. Verfahren nach Anspruch 2, **dadurch gekennzeichnet, dass**
das Aktualisieren einer Programm-Lesezeichenliste gemäß der aktualisierenden Programm-Lesezeichennachricht Folgendes umfasst: Aktualisieren einer Programm-Lesezeichenliste zum Aufzeichnen des Multicast-Programmnamens und der Multicast-Programmadresse durch das UE (403) gemäß dem Multicast-Programmnamen und der Multicast-Programmadresse.

4. Verfahren nach Anspruch 3, wobei die aktualisierende Programm-Lesezeichennachricht eine hinzufügende Programmnachricht ist;
wobei das Aktualisieren einer Programm-Lesezeichenliste durch das UE (403) gemäß dem Multicast-Programmnamen und der Multicast-Programmadresse Folgendes umfasst:
Beschaffen des Multicast-Programmnamens und der Multicast-Programmadresse durch das UE (403) aus der hinzufügenden Programmnachricht und Aufzeichnen des Multicast-Programmnamens und der Multicast-Programmadresse in der Programm-Lesezeichenliste.

5. Verfahren nach Anspruch 3, wobei die aktualisierende Programm-Lesezeichennachricht eine modifizierende Programmnachricht ist;
wobei das Aktualisieren einer Programm-Lesezeichenliste durch das UE (403) gemäß dem Multicast-Programmnamen und der Multicast-Programmadresse Folgendes umfasst:
Beschaffen des Multicast-Programmnamens und der Multicast-Programmadresse durch das UE (403) aus der modifizierenden Programmnachricht und Umändern der dem Multicast-Programmnamen in der Programm-Lesezeichenliste entsprechenden Multicast-Programmadresse in die aus der modifizierenden Programmnachricht beschaffte Multicast-Programmadresse.

6. Verfahren nach Anspruch 3, wobei die aktualisierende Programm-Lesezeichennachricht eine löschende Programmnachricht ist;
wobei das Aktualisieren einer Programm-Lesezeichenliste durch das UE (403) gemäß dem Multicast-Programmnamen und der Multicast-Programmadresse Folgendes umfasst:
Beschaffen des Multicast-Programmnamens und der Multicast-Programmadresse durch das UE (403) aus der löschenden Programmnachricht und Löschen des Multicast-Programmnamens und der Multicast-Programmadresse in der Programm-Lesezeichenliste gemäß dem Multicast-Programmnamen und der Multicast-Programmadresse, die aus der löschenden Programmnachricht beschafft wurden.

7. System zum Beschaffen einer Multicast-Programmadresse, **dadurch gekennzeichnet, dass** das System Folgendes umfasst:
ein Over The Air OTA (401), das in der Lage ist, über ein Short Message Service Center SMSC eine aktualisierende Programm-Lesezeichennachricht zu einem UE zu senden (301), wobei die aktualisierende Programm-Lesezeichennachricht Quellenadresse, Multicast-Programmadresse und Operationstyp umfasst;
ein Benutzergerät UE (403), das in der Lage ist, die aktualisierende Programm-Lesezeichennachricht über ein Short Message Service Center SMSC (402) von dem OTA (401) zu empfangen und die Multicast-Programmadresse aus der aktualisierenden Programm-Lesezeichennachricht zu beschaffen und den Nachrichtentyp des aktualisierenden Programmlesezeichens gemäß der Quellenadresse und dem Operationstyp zu bestimmen und die Programm-Lesezeichenliste gemäß der aktualisierenden Programm-Lesezeichennachricht zu aktualisieren, wobei die aktualisierende Programm-Lesezeichennachricht durch das OTA zu dem SMSC gesendet wird (301) und die aktualisierende Programm-Lesezeichennachricht durch das SMSC in eine Kurznachricht umgesetzt wird (302),
wobei die Kurznachricht durch das UE gemäß der Quellenadresse als eine aktualisierende Programm-Lesezeichennachricht bestimmt wird.

8. System nach Anspruch 7, wobei die aktualisierende Programm-Lesezeichennachricht ferner einen Multicast-Programmnamen enthält, der der Multicast-Programmadresse entspricht; und
das UE (403) den Multicast-Programmnamen aus der aktualisierenden Programm-Lesezeichennachricht beschafft und eine Programm-Lesezeichenliste zum Aufzeichnen des Multicast-Programmnamens und der Multicast-Programmadresse gemäß dem Multicast-Programmnamen und der Multicast-Programmadresse aktualisiert.

9. Vorrichtung (403) zum Beschaffen einer Multicast-Programmadresse, **dadurch gekennzeichnet, dass** die Vorrichtung Folgendes umfasst:
eine Empfangseinheit (4031), die in der Lage ist, eine Programm-Lesezeichennachricht von einem Short Message Service Center SMSC zu empfangen; wobei die Programm-Lesezeichennachricht von einem OTA zu dem SMSC gesendet wird (301) und durch das SMSC in eine Kurznachricht umgesetzt wird (302), wobei die Programm-Lesezeichennachricht eine Quellenadresse, eine Multicast-Programmadresse und einen Operationstyp umfasst, wobei die Programm-Lesezeichennachricht gemäß der Quellenadresse als eine aktualisierende Programm-Lesezeichennachricht bestimmt wird (303) und wobei ein Nachrichtentyp gemäß der Quellenadresse und dem Operationstyp bestimmt wird; und
eine Programm-Lesezeicheneinheit (4032), die in der Lage ist, die aktualisierende Programmnachricht von der Empfangseinheit zu empfangen, einen Multicast-Programmnamen und eine Multicast-Programmadresse zu beschaffen, eine Programm-Lesezeichenliste einzurichten und den Multicast-Programmnamen und die Multicast-Programmadresse in der Programm-Lesezeichenliste aufzuzeichnen.

## Revendications

1. Procédé d'acquisition d'une adresse de programme à multidiffusion, **caractérisé en ce que** le procédé comprend :
la réception, par un Equipement Utilisateur, UE (403), par l'intermédiaire d'un Centre de Services de Messages Courts, SMSC (402), d'un message de signet de programme depuis une Liaison Radio, OTA (401), le message de signet de programme comprenant une adresse source, une adresse de programme à multidiffusion et un type d'opération ; le message de signet de programme étant envoyé (301) par l'OTA au SMSC, et le message de signet de programme étant converti (302) en un message court par le SMSC, l'UE déterminant (303) que le message court est un message d'actualisation de signet de programme en fonction de l'adresse source ;
l'acquisition, par l'UE (403), de l'adresse de programme à multidiffusion à partir du message de signet de programme s'il est déterminé que celui-ci est un message d'actualisation de signet de programme,
la détermination du type de message du message d'actualisation de signet de programme en fonction de l'adresse source et du type d'opération, et l'actualisation d'une liste de signets de programme en fonction du message d'actualisation de signet de programme.

2. Procédé selon la revendication 1, dans lequel le message d'actualisation de signet de programme contient en outre un nom de programme à multidiffusion correspondant à l'adresse de programme à multidiffusion, le procédé comprenant en outre :
l'acquisition, par l'UE (403), du nom du programme à multidiffusion à partir du message d'actualisation de signet de programme.

3. Procédé selon la revendication 2, **caractérisé en ce que** :
l'actualisation d'une liste de signets de programme en fonction du message d'actualisation de signet de programme comprend : l'actualisation, par l'UE (403),
d'une liste de signets de programme pour enregistrer le nom du programme à multidiffusion et l'adresse du programme à multidiffusion en fonction du nom du programme à multidiffusion et de l'adresse du programme à multidiffusion.

4. Procédé selon la revendication 3, dans lequel le message d'actualisation de signet de programme est un message d'ajout de programme ;
l'actualisation, par l'UE (403), d'une liste de signets de programme en fonction du nom du programme à multidiffusion et de l'adresse du programme à multidiffusion comprend :
l'acquisition, par l'UE (403), du nom du programme à multidiffusion et de l'adresse du programme à multidiffusion à partir du message d'ajout de programme, et
l'enregistrement du nom du programme à multidiffusion et de l'adresse du programme à multidiffusion dans la liste de signets de programme.

5. Procédé selon la revendication 3, dans lequel le message d'actualisation de signet de programme est un message de modification de programme ;
l'actualisation, par l'UE (403), d'une liste de signets de programme en fonction du nom du programme à multidiffusion et de l'adresse du programme à multidiffusion comprend :
l'acquisition, par l'UE (403), du nom du programme à multidiffusion et de l'adresse du programme à multidiffusion à partir du message de modification de programme,
et le changement de l'adresse du programme à multidiffusion correspondant au nom du programme à multidiffusion dans la liste de signets de programme en l'adresse de programme à multidiffusion acquise à partir du message de modification de programme.

6. Procédé selon la revendication 3, dans lequel le message d'actualisation de signet de programme est un message de suppression de programme ;
l'actualisation, par l'UE (403), d'une liste de signets de programme en fonction du nom du programme à multidiffusion et de l'adresse du programme à multidiffusion comprend :
l'acquisition, par l'UE (403), du nom du programme à multidiffusion et de l'adresse du programme à multidiffusion à partir du message de suppression de programme, et
la suppression du nom du programme à multidiffusion et de l'adresse du programme à multidiffusion dans la liste de signets de programme en fonction du nom du programme à multidiffusion et de l'adresse du programme à multidiffusion acquis à partir du message de suppression de programme.

7. Système d'acquisition d'une adresse de programme à multidiffusion, **caractérisé en ce que** le système comprend :
une Liaison Radio, OTA (401), capable d'envoyer (301) un message d'actualisation de signet de programme à un UE par l'intermédiaire d'un Centre de Services de Messages Courts, SMSC, le message d'actualisation de signet de programme comprenant une adresse source, une adresse de programme à multidiffusion et un type d'opération ;
un Equipement Utilisateur, UE (403), capable de recevoir le message d'actualisation de signet de programme depuis l'OTA (401) par l'intermédiaire d'un Centre de Services de Messages Courts, SMSC (402), et d'acquérir l'adresse de programme à multidiffusion à partir du message d'actualisation de signet de programme et de déterminer le type de message du message d'actualisation de signet de programme en fonction de l'adresse source et du type d'opération, et d'actualiser une liste de signets de programme en fonction du message d'actualisation de signet de programme, le message d'actualisation de signet de programme étant envoyé (301) par l'OTA au SMSC, et le message d'actualisation de signet de programme étant converti (302) en un message court par le SMSC, l'UE déterminant que le message court est un message d'actualisation de signet de programme en fonction de l'adresse source.

8. Système selon la revendication 7, dans lequel le message d'actualisation de signet de programme contient en outre un nom de programme à multidiffusion correspondant à l'adresse de programme à multidiffusion ;
l'UE (403) acquiert le nom du programme à multidiffusion à partir du message d'actualisation de signet de programme, et actualise une liste de signets de programme pour enregistrer le nom du programme à multidiffusion et l'adresse du programme à multidiffusion en fonction du nom du programme à multidiffusion et de l'adresse du programme à multidiffusion.

9. Appareil (403) d'acquisition d'une adresse de programme à multidiffusion, **caractérisé en ce que** l'appareil comprend :
une unité de réception (4031), capable de recevoir un message de signet de programme depuis un Centre de Services de Messages Courts, SMSC ; le message de signet de programme étant envoyé (301) depuis une OTA au SMSC, et étant converti (302) en un message court par le SMSC, le message de signet de programme comprenant une adresse source, une adresse de programme à multidiffusion et un type d'opération, où il est déterminé (303) que le message de signet de programme est un message d'actualisation de signet de programme en fonction de l'adresse source et
où un type de message est déterminé en fonction de l'adresse source et du type d'opération ;
une unité de signet de programme (4032), capable de recevoir le message d'actualisation de signet de programme depuis l'unité de réception, d'acquérir un nom de programme à multidiffusion et une adresse de programme à multidiffusion,
d'établir une liste de signets de programme et d'enregistrer le nom du programme à multidiffusion et l'adresse du programme à multidiffusion dans la liste de signets de programme.
